(19) Europäisches Patentamt
European Patent Office
Office européen des brevets

(11) **EP 4 737 405 A1**

(12) **EUROPÄISCHE PATENTANMELDUNG**

(43) Veröffentlichungstag:
**06.05.2026 Patentblatt 2026/19**

(21) Anmeldenummer: **25153887.2**

(22) Anmeldetag: **24.01.2025**

(51) Internationale Patentklassifikation (IPC):
**C03B 23/047** [(2006.01)]  **C03B 23/07** [(2006.01)]
**C03B 37/012** [(2006.01)]

(52) Gemeinsame Patentklassifikation (CPC):
**C03B 23/047; C03B 23/07; C03B 37/01242;**
C03B 2203/42

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **31.10.2024 EP 24210268**

(71) Anmelder: **Heraeus Quarzglas GmbH & Co. KG
63450 Hanau (DE)**

(72) Erfinder:
• **Schuster, Kay
06803 Bitterfeld-Wolfen (DE)**
• **Rosenberger, Manuel
63801 Kleinostheim (DE)**
• **Tieß, Tobias
06803 Bitterfeld-Wolfen (DE)**

(74) Vertreter: **Heraeus IP
Heraeus Business Solutions GmbH
Intellectual Property
Heraeusstraße 12-14
63450 Hanau (DE)**

(54) **HERSTELLUNG VON KAPILLAREN AUS HOHLZYLINDERN**

(57) Die vorliegende Erfindung betrifft ein Verfahren zur Herstellung von Kapillaren aus großen, mechanisch bearbeiteten Quarzglas-Hohlzylindern sowie die erfindungsgemäß hergestellten Kapillaren. Das Verfahren umfasst das kontinuierliches Zuführen eines Quarzglas-Hohlzylinders mit mit einem Außendurchmesser $Z_a$ und einem Innendurchmesser $Z_i$ in eine Heizzone, bis der Quarzglas-Hohlzylinder darin bereichsweise erweicht wird; iii) Inverses Kollabieren und gleichzeitiges Elongieren des Quarzglas-Hohlzylinders aus dem erweichten Bereich, um einen Kapillarstrang mit einem Außendurchmesser $C_a$ und einem Innendurchmesser $C_i$ zu erhalten, so dass $(Z_a/Z_i)/(C_a/C_i) = 1{,}2$ bis $6{,}0$.

FIG. 1

**Beschreibung**

**EINLEITUNG**

Die vorliegende Erfindung betrifft ein Verfahren zur Herstellung von Kapillaren bzw. Antiresonanzelement-Vorformlingen, umfassend einen Verfahrensschritt, bei dem ein Hohlzylinder mit einem Außendurchmesser $Z_a$ und einem Innendurchmesser $Z_i$, kontinuierlich durch eine Heizzone zu einem Kapillarstrangausgezogen wird.

**HINTERGRUND DER ERFINDUNG UND STAND DER TECHNIK**

Die vorliegende Erfindung betrifft ein Verfahren zur Herstellung von Kapillaren bzw. Antiresonanzelement-Vorformlingen, umfassend einen Verfahrensschritt, bei dem ein Hohlzylinder mit einem Außendurchmesser $Z_a$ und einem Innendurchmesser $Z_i$, kontinuierlich durch eine Heizzone zu einem Kapillarstrang ausgezogen wird. Dabei wird innerhalb des Kapillarstrangs ein innseitiger Blasdruck angelegt, um einen runden Querschnitt zu stabilisieren oder um gegebenenfalls den Innendurchmesser im Verhältnis zum Außendurchmesser zu verändern. Insbesondere der Außendurchmesser wird dabei verkleinert. Der Kapillarstrang ist durch einem Außendurchmesser $C_a$ und einem Innendurchmesser Ci gekennzeichnet.

Durch Abtrennen des Kapillarstrangs in Solllänge werden Kapillaren der gewünschten Länge erhalten. Sie dienen als Halbzeug bei der Herstellung von Vorformen für optische Fasern, als Antiresonanzelement-Vorformlinge. Werden diese Vorformen zu antiresonanten Hohlkernfasern weiterverarbeitet, werden die darin verbauten Antiresonanzelement-Vorformlinge zu Antiresonanzelementen.

Prinzipiell sind im Stand der Technik bereits Verfahren zu Herstellung solcher Kapillaren bzw. Antiresonanzelement-Vorformlinge bekannt.

EP 4 011 840 A betrifft ein Verfahren zur Herstellung eines Vorformlings einer Antiresonanten-Hohlkernfaser. Der Vorformling besteht aus mindestens einem Hüllrohr bzw. Mantelrohr und mindestens einem Antiresonanzelement-Vorformling, der mittels eines thermischen Eintrags in der Innenseite des Hüllrohrs fixiert wird. Dazu ist ein Kontaktelement zwischen dem Hüllrohr und dem mindestens einen Antiresonanzelement-Vorformling nötig, um das Risiko zu vermeiden, den Antiresonanz-Vorformling durch den thermischen Eintrag zu beschädigen.

JP 2004 123461 A betrifft ein Verfahren zur Herstellung von Glaskörpern, die als Kapillaren bzw. Antiresonanzelement-Vorformling dienen können. In einem ersten Schritt wird ein Glas Hohlzylinder so lange poliert, bis er eine mittlere Oberflächenrauheit von 0.05 $\mu$m oder weniger aufweist. Der Hohlzylinder aus Glas wird anschließend in einem Heißformverfahren elongiert.

EP 0 598 349 A betrifft Quarzglas-Hohlzylinder mit einem großen Durchmesser und Kapillaren bzw. Antiresonanzelement-Vorformlinge die mittels des beanspruchten Verfahrens zur Herstellung von Antiresonanten-Hohlkernfasern zu solchen Produkten verarbeitet werden.

CN 116715447 A betrifft ein Verfahren zur Herstellung eines F-dotierten gläsernen Hohlzylinders, welcher zur Herstellung von Antiresonanzelement-Vorformlingen verwendet werden kann. Der dotierte Hohlzylinder wird in einem Heißformschritt mittels eines ebenfalls in CN 116715447 A beschriebenen Verfahrens zu einem Antiresonanzelement-Vorformling elongiert. Dabei wird ein Gasstrom durch den Zylinder geführt, um dessen innere Geometrie zu stabilisieren.

WO 2008/138744 A betrifft ein Verfahren zur Herstellung von Glaskörpern, die als Kapillare bzw. Antiresonanzelement Vorformlinge dienen können. Dazu wird ein Hohlzylinder aus Quarzglas elongiert, indem er mittels eines dazu geeigneten Rollenziehers entlang einer Zugachse durch eine Heißformzone gezogen wird.

WO 2006/122904 A ist auch auf ein Verfahren zur Herstellung von Glaskörpern, die als Kapillare bzw. Antiresonanzelement-Vorformling dienen können, gerichtet. Dazu wird ein Hohlzylinder aus Quarzglas elongiert, welcher einen wohldefinierten Außen- und Innenradius aufweist. Es wird ein Radienverhältnis von 1,02 bis 1,7 wird angestrebt. Durch das Radienverhältnis wird gewährleistet, dass die dimensionalen Verhältnisse zwischen Außen- und Innenradius des Hohlzylinders auch nach dem Heißformvorgang in der Kapillare bzw. Antiresonanzelement Vorformling erhalten bleiben.

WO 2004/083141 A betrifft ein Verfahren zur Herstellung von Kapillaren bzw. Antiresonanzelement-Vorformlingen. Einem Ofen mit ringförmigem Heizelement aus Graphit wird von oben ein Hohlzylinder aus synthetischem Quarzglas in vertikaler Orientierung der Zylinder-Längsache zugeführt. Für den Hohlzylinder wird ein Verhältnis der Außen- und Innendurchmesser von etwa 2,14 angestrebt. Nach der Elongierung ist das Verhältnis der Außen und Innendurchmesser in der Kapillare bzw. Antiresonanzelement-Vorformling etwa 1,27.

DE 102 28 599 A betrifft ein weiteres Verfahren zur Herstellung von Glaskörpern, die als Kapillaren oder Antiresonanzelement-Vorformling dienen können. Bei diesem Verfahren wird ein Hohlzylinder aus Quarzglas mittels Heißformverfahrensschritten zu einer verjüngten Glasform elongiert. Im Zuge des Verfahrens wird ein Gasstrom durch den elongierten Körper geleitet. Bei dem Gasstrom handelt es sich um eine Mischung aus Inertgas und Sauerstoff, wobei die Sauerstoffkonzentration variiert werden kann.

CN 113651527 A betrifft ein Verfahren zur Herstellung von Kapillaren oder Antiresonanzelement-Vorformlingen, bei dem Glaszylinder, die mittels Gasphasenabscheidungsverfahren hergestellt wurden, elongiert werden.

EP 3 112 323 A betrifft ein Verfahren zur Herstellung von Glaskörpern, die als Antiresonanzelement-Vorformlinge dienen können. Im Zuge des Verfahrens wird ein Hohlzylinder aus Quarzglas mit einem bestimmten Innen- und Außendurchmesser unter Wärmeeinwirkung zu einer neuen, verjüngten Form elongiert. Um dabei zu verhindern, dass der umgeformte Hohlzylinder bei dem Umformungsprozess unerwünschte geometrische Verformungen oder gar Beschädigungen erfährt, wird ein Blasgegendruck beim Heißformvorgang an der Innenseite des Zylinders erzeugt, was die Bildung der unbeschädigten und gewünschten Form begünstigt.

## AUFGABE DER ERFINDUNG

Aufgabe der vorliegenden Erfindung ist es, ein Verfahren bereit zu stellen, bei welchem Hohlzylinder zu Kapillaren bzw. Antiresonanzelement-Vorformlingen verarbeitet werden können, ohne dass die Hohlzylinder einer besonderen Vorbehandlung bedürfen. Das Verfahren soll im industriellen Maßstab skalierbar sein und Kapillaren bzw. Antiresonanzelement-Vorformlinge von gleichbleibender Qualität zur Verfügung stellen.

Es ist den Erfindern der vorliegenden Erfindung überraschend gelungen das Problem zu lösen, indem sie das Verfahren ausgehend von großen Hohlzylindern ausführen, deren Innen- und Außendurchmesserverhältnis in einem speziellen, erfindungsgemäßen Bereich liegt. Ausgehend von Hohlzylindern mit solchen Eigenschaften ist es den Erfindern gelungen, durch Kollabierungs- und Elongierungsschritte des Hohlzylinders kontinuierlich Kapillaren von hoher Qualität zu produzieren. Das Verhältnis der Außen- und Innendurchmesser sowohl von Hohlzylinder als auch von Kapillarstrang liegt dabei in einem erfindungsgemäßen Größenbereich, der Stabilität und Güte der abgetrennten Kapillaren gewährleistet.

## KURZBESCHREIBUNG DER ERFINDUNG

Die vorliegende Erfindung betrifft ein Verfahren zur Herstellung von Antiresonanzelement-Vorformlingen gemäß den nachfolgenden Punkten:

[1] Verfahren zur Herstellung von Kapillaren bzw. Antiresonanzelement-Vorformlingen, umfassend die Schritte:

i) Bereitstellen eines Quarzglas-Hohlzylinders mit einem großen Außendurchmesser $Z_a$, einem kleinen Innendurchmesser $Z_i$;

ii) Kontinuierliches Zuführen des Quarzglas-Hohlzylinders in eine Heizzone, bis der Quarzglas-Hohlzylinder darin bereichsweise erweicht wird;

iii) Inverses Kollabieren und gleichzeitiges Elongieren des Quarzglas-Hohlzylinders aus dem erweichten Bereich, um einen Kapillarstrang mit einem Außendurchmesser $C_a$ und einem Innendurchmesser Ci zu erhalten, dadurch gekennzeichnet, dass sich das Außen- und Innendurchmesserverhältnis des Zylinders während des Inversen Kollabierens und gleichzeitigen Elongierens zur Kapillare so verändert, das gilt:

$$\frac{\frac{z_a}{z_i}}{\frac{c_a}{c_i}} = 1{,}2 \ bis \ 6{,}0;$$

Bevorzugt 2,9 bis 4,2

iv) Abtrennen des Kapillarstranges in Solllänge unter Erhalt von Kapillaren mit einem Außendurchmesser $C_a$ und einem Innendurchmesser Ci, für die gilt:

$$\frac{c_a}{c_i} = 1{,}05 \ bis \ 1{,}50,$$

Bevorzugt 1,08 bis 1,30.

[2] Verfahren gemäß [1], dadurch gekennzeichnet, dass der Quarzglas-Hohlzylinder ein mechanisch bearbeiteter Quarzglas-Hohlzylinder ist,

[3] Verfahren gemäß [1] und [2], dadurch gekennzeichnet, dass der der Quarzglas-Hohlzylinder keine thermische Vorbehandlung erfordert.

[4] Verfahren gemäß [1] bis [3], dadurch gekennzeichnet, dass der Quarzglas-Hohlzylinder einen großen Außendurchmesser von 120 mm bis 250 mm aufweist, bevorzugt einen Außendurchmesser von 150 mm bis 200 mm aufweist.

[5] Verfahren gemäß [1] bis [4], dadurch gekennzeichnet, dass der Quarzglas-Hohlzylinder einen kleinen Innendurchmesser von 20 mm bis 140 mm aufweist, bevorzugt einen Innendurchmesser von 35 mm bis 90 mm aufweist.

[6] Verfahren gemäß [1] bis [5], dadurch gekennzeichnet, dass für das Verhältnis des Außen- und Innendurchmessers des mechanisch bearbeiteten Quarzglas-Hohlzylinder gilt:

$$\frac{z_a}{z_i} = 1,8 \; bis \; 5,0,$$

Bevorzugt ist, dass der Quarzglas-Hohlzylinder ein Verhältnis des Außen- und Innendurchmessers von 1,8 bis 3,0 aufweist.

[7] Verfahren gemäß [1] bis [6], dadurch gekennzeichnet, dass die Kapillaren, die aus dem mechanisch bearbeiteten Quarzglas-Hohlzylinder gebildet werden, einen Außendurchmesser von 2 mm bis 20 mm, bevorzugt einen Außendurchmesser von 2,6 mm bis 17 mm aufweisen.

[8] Verfahren gemäß [1] bis [7], dadurch gekennzeichnet, dass die Kapillaren, die aus dem mechanisch bearbeiteten Quarzglas-Hohlzylinder gebildet werden, einen Innendurchmesser von 1 mm bis 17 mm aufweisen, bevorzugt einen Innendurchmesser von 2 mm bis 15,5 mm aufweisen.

[9] Verfahren gemäß [1] bis [8], dadurch gekennzeichnet, dass die Ziehgeschwindigkeit des Kapillarstrangs während des Ziehvorgangs 1 m/min bis 6 m/min beträgt.

[10] Verfahren gemäß [1] bis [9], dadurch gekennzeichnet, dass die Nachführrate des Quarzglas-Hohlzylinders 0,3 mm/min bis 3 mm/min, bevorzugt 1,1 mm/min bis 1,5 mm/min beträgt.

[11] Verfahren gemäß [1] bis [10], dadurch gekennzeichnet, dass die Nachführrate des Quarzglas-Hohlzylinders 3,5 kg/h bis 6,0 kg/h, bevorzugt 3,9 bis 5,3 kg/h beträgt.

[12] Verfahren gemäß [1] bis [11], dadurch gekennzeichnet, dass Quarzglas-Hohlzylinder mit einem Volumendurchsatz zwischen 29 cm$^3$/min und 40 cm$^3$/min zu einem Kapillarstrang geformt werden.

[13] Verfahren gemäß [1] bis [12], dadurch gekennzeichnet, dass dadurch aus einem Quarzglas-Hohlzylinder mit einer Querschnittsfläche von 10000 mm$^2$ bis 31000 mm$^2$ Kapillaren mit einer Querschnittsfläche von 2 mm$^2$ bis 40 mm$^2$ erhalten werden.

[14] Verfahren gemäß [1] bis [13], dadurch gekennzeichnet, dass die Zugstrecke hinter der Heizzone bis zur Abschnittposition 1,0 m bis 8,0 m lang, bevorzugt 1,5 m bis 6,0 m lang ist.

[15] Verfahren gemäß [1] bis [14], dadurch gekennzeichnet, dass der Kapillarstrang während des Ausziehvorgangs auf der Zugstrecke mithilfe von geeigneten Stabilisatoren gegenüber Vibrationen geschützt werden.

[16] Verfahren gemäß [1] bis [15], dadurch gekennzeichnet, dass während des Ziehvorgangs des Kapillarstrangs aus dem erweichten Quarzglas-Hohlzylinder ein Blasdruck p$^+$ in der Innenbohrung des Quarzglas-Hohlzylinders bzw. des daraus resultierenden Kapillarstrangs erzeugt wird.

[17] Verfahren gemäß [16], dadurch gekennzeichnet, dass der Blasdruck p$^+$ zwischen dem Gleichgewichtsdruck des Quarzglas-Hohlzylinders pz und dem Gleichgewichtsdruck des Kapillarstrangs pc liegt.

[18] Verfahren gemäß [16] und [17], dadurch gekennzeichnet, dass der Blasdruck mit einem Gas oder Gasgemisch umfassend trockene Luft, Stickstoff, Argon und/oder Helium, bevorzugt mit trockener Luft, erzeugt wird.

[19] Verfahren gemäß [1] bis [18], dadurch gekennzeichnet, dass das Abtrennen der Kapillaren in Solllänge von einem Kapillarstrang Abschneiden, Absägen, Abbrechen und Mischungen davon umfasst.

[20] Verfahren gemäß [1] bis [19], umfassend die folgenden Schritte:

i) Bereitstellen eines Quarzglas-Hohlzylinders mit einem Außendurchmesser $Z_a$, von 120 mm bis 250 mm und einem Innendurchmesser $Z_i$ von 20 mm bis 140 mm;

ii) Kontinuierliches Zuführen des Quarzglas-Hohlzylinders mit einer Nachführrate von 0,3 mm/min bis 3 mm/min in eine Heizzone, bis der Quarzglas-Hohlzylinder darin bereichsweise erweicht wird;

iii) Inverses Kollabieren und gleichzeitiges Elongieren des Quarzglas-Hohlzylinders aus dem erweichten Bereich mit einer Ziehgeschwindigkeit von 1 m/min bis 6 m/min währenddessen ein innseitiger Blasdruck $p^+$ angelegt wird, um einen Kapillarstrang mit einem Außendurchmesser $C_a$ und einem Innendurchmesser $C_i$ zu erhalten, dadurch gekennzeichnet, dass sich das Außen- und Innendurchmesserverhältnis des Zylinders während des Inversen Kollabierens und gleichzeitigen Elongierens zur Kapillare so verändert, das gilt:

$$\frac{\frac{z_a}{z_i}}{\frac{c_a}{c_i}} = 2,9 \ bis \ 4,2;$$

iv) Abtrennen des Kapillarstranges in Solllänge unter Erhalt von Kapillaren mit einem Außendurchmesser $C_a$ und einem Innendurchmesser $C_i$, für die gilt:

$$\frac{C_a}{C_i} = 1,05 \ bis \ 1,50$$

Bevorzugt 1,08 bis 1,30.

[21] Kapillare, dadurch gekennzeichnet, dass sie einen Außendurchmesser $R_a$ und einen Innendurchmesser $R_i$ aufweist, für die gilt:

$$\frac{c_a}{c_i} = 1,05 \ bis \ 1,50,$$

Bevorzugt 1,08 bis 1,30.

[22] Kapillare gemäß [21], dadurch gekennzeichnet, dass sie über einen Gleichgewichtsdruck $p_{EQ}$ von 50 Pa bis 800 Pa verfügt.

[23] Kapillare gemäß [21] bis [22], dadurch gekennzeichnet, dass das Verhältnis einer längeren Achse zu einer kürzeren Achse im Querschnitt 1,00 bis 1,02, bevorzugt weniger als 1,01 beträgt, gemessen mittels eines optischen Mikroskops.

[24] Kapillare gemäß [21] bis [23], dadurch gekennzeichnet, dass sie einen Außendurchmesser $C_a$ und einen Innendurchmesser Ci aufweist, für die gilt:

$$\frac{c_a}{c_i} = 1,05 \ bis \ 1,50,$$

Bevorzugt 1,08 bis 1,30.
und einen Gleichgewichtsdruck pc zwischen 50 Pa und 800 Pa aufweist, und
dass das Verhältnis einer längeren Achse zu einer kürzeren Achse im Querschnitt 1,00 bis 1,02 beträgt.

[25] Kapillare gemäß [21] bis [24], erhältlich nach einem Verfahren von [1] bis [20].

## DETAILLIERTE BESCHREIBUNG DER ERFINDUNG

### I. Definitionen

Im Sinne der vorliegenden Erfindung bezeichnet der Begriff *Kollabieren* einen Vorgang, bei welchem die Geometrie eines *Halbzeugs* insoweit verändert wird, dass das Außen- und Innendurchmesserverhältnis sich vergrößert.

Beispielsweise fällt dabei ein rohrförmiges *Halbzeug* also kontrolliert in sich zusammen, der Innendurchmesser sinkt schneller als der Außendurchmesser, es wird kontrolliert *kollabiert*. Üblicher-, aber nicht notwendigerweise, werden *Kollabierungsschritte* gemeinsam mit *Elongierungsschritten* unter Einwirkungen von Temperatur ausgeführt.

Im Sinne der vorliegenden Erfindung bezeichnet der Begriff *Elongieren* einen Vorgang, bei welchem die Geometrie eines *Halbzeugs* insoweit verändert wird, dass die Länge vergrößert wird. *Elongierungsschritte* werden unter Einwirkungen von Temperatur und gegebenenfalls Druck ausgeführt.

Im Sinne der vorliegenden Erfindung bezeichnet der Begriff *Verhältniszug* einen Vorgang, bei dem das Verhältnis zwischen Außen- und Innendurchmesser eines *Halbzeugs* bei dessen Verarbeitung zu einem *Kapillarstrang* oder einer *Kapillare* gleichbleibend, also konstant ist. Der *Verhältniszug* findet üblicherweise im Bereich von im Sinne der Erfindung verhältnismäßig gro-ßen Außen- und Innendurchmessern statt. Sinken Außen- und Innendurchmesser bei der Verarbeitung unter einen bestimmten Durchmesser ab, wird das Anlegen eines innseitigen Drucks nötig, der dem Gleichgewichtsdruck des *Halbzeugs* entspricht, um den Verhältniszug ausführen zu können.

Im Sinne der vorliegenden Erfindung bezeichnet der Begriff *Inverses Kollabieren* einen Vorgang, bei welchem die Geometrie eines *Halbzeugs* insoweit verändert wird, dass das Außen- und Innendurchmesserverhältnis sich verkleinert. Das bedeutet, dass der Außendurchmesser schneller abnimmt, als der Innendurchmesser, was üblicherweise das Anlegen eines innseitigen Drucks erfordert, der höher ist als der Gleichgewichtsdruck des *Halbzeugs*.

Im Sinne der vorliegenden Erfindung ist der Begriff *Halbzeug* ein Sammelbegriff, welcher jedes erfindungsgemäße Zwischenprodukt, das innerhalb eines erfindungsgemäßen Verfahrensschrittes zu einer *Kapillare* bzw. einem *Antiresonanzelement-Vorformling* weiterverarbeitet werden kann, umfasst.

Im Sinne der vorliegenden Erfindung bezeichnet der Begriff *Quarzglas Holzylinder* ein *Halbzeug,* aus welchem mittels des erfindungsgemäßen Verfahrens *Kapillarstränge* durch *Kollabierungs-/Inverse Kollabierungs-* und *Elongierungsschritte* oder im *Verhältniszug* hergestellt werden. *Quarzglas Hohlzylinder* im Sinne der vorliegenden Erfindung werden üblicherweise mechanisch hergestellt und zeichnen sich durch große Außen- und Innendurchmesser $Z_a$ und $Z_i$ im Vergleich zu *Quarzglas Hohlzylindern* aus, die im Stand der Technik üblicherweise verwendet werden, um *Kapillaren* herzustellen. Mechanisch hergestellte *Quarzglas Hohlzylinder* werden bevorzugt verwendet.

Im Sinne der vorliegenden Erfindung bezeichnet der Begriff Kapillarstrang das Ergebnis der Ausführung erfindungsgemäßer *Verhältniszüge* oder erfindungsgemäßer *Kollabierungs-/Inverse Kollabierungs-* und *Elongierungsschritte* , die an *Quarzglas Holzylindern* ausgeführt worden sind. *Kapillarstränge* im Sinne der vorliegenden Erfindung zeichnen sich durch einen Außendurchmesser $C_a$ und einen Innendurchmesser Ci aus, und sie können durch Zuschneiden in einer Solllänge zu *Kapillaren* im Sinne der Erfindung weiterverarbeitet werden.

Im Sinne der vorliegenden Erfindung bezeichnet der Begriff *Kapillaren* rohrförmige Körper, die üblicherweise aus Glas bestehen. Die *Kapillaren* im Sinne der Erfindung weisen eine *Kapillar*-Innenbohrung und eine Kapillar-Längsachse auf entlang der sich eine von einer Innenkapillarfläche und einer Außenkapillarfläche begrenzte Kapillar-Wandung erstreckt. Kapillaren im Sinne der Erfindung weisen einen Innenkapillardurchmesser Ci und einen Außenkapillardurchmesser $C_a$ auf. Der Begriff *Kapillaren* im Sinne der Erfindung bezeichnet ausschließlich einzelne Kapillareinheiten, die aus einem *Kapillarstrang* zugeschnitten worden sind. Erfindungsgemäße *Kapillaren* werden zu einem *Antiresonanzelement* in einer antiresonanten Hohlkernfaser weiterverarbeitet. In diesem Zusammenhang werden die Kapillaren im Sinne der Erfindung auch als *Antiresonanzelement-Vorformling* bezeichnet.

Wenn im Sinne der vorliegenden Erfindung von explizit bezeichneten Zahlenwerten in einem Bereich von X bis Y oder von mindestens X bis mindestens Y oder von größer als X bis größer als Y etc. die Rede ist, sind damit insbesondere auch alle implizit dazwischen liegenden Werte erfasst, die durch die Angabe der Nullstellen suggeriert werden. Liegt ein Wert also zwischen 1 und 10 sind damit insbesondere auch 2, 3, 4, 5, 6, 7, 8, und 9 mit umfasst. Liegt ein Wert zwischen 1,0 und 2,0 sind damit insbesondere auch 1,1, 1,2, 1,3, 1,4, 1,5, 1,6, 1,7, 1,8 und 1,9 mit umfasst. Liegt ein Wert zwischen 1,00 und 1,10 sind damit insbesondere auch 1,01, 1,02, 1,03, 1,04, 1,05, 1,06, 1,07, 1,08 und 1,09 mit umfasst.

**II. Verfahren**

Das erfindungsgemäße Verfahren zur Herstellung von Kapillaren oder auch Antiresonanzelement-Vorformlingen funktioniert bevorzugt für mechanisch bereitgestellte Quarzglas-Hohlzylinder, die durch verhältnismäßig große Dimensionen gekennzeichnet sind. Das Verfahren umfasst insbesondere die folgenden Schritte:

i) Bereitstellen eines Quarzglas-Hohlzylinders mit einem großen Außendurchmesser $Z_a$, einem kleinen Innendurchmesser $Z_i$;

ii) Kontinuierliches Zuführen des Quarzglas-Hohlzylinders in eine Heizzone, bis der Quarzglas-Hohlzylinder darin bereichsweise erweicht wird;

iii) Inverses Kollabieren und gleichzeitiges Elongieren des Quarzglas-Hohlzylinders aus dem erweichten Bereich, um einen Kapillarstrang mit einem Außendurchmesser $C_a$ und einem Innendurchmesser $C_i$ zu erhalten, dadurch gekennzeichnet, dass sich das Außen- und Innendurchmesserverhältnis des Zylinders während des Inversen Kollabierens und gleichzeitigen Elongierens zur Kapillare so verändert, das gilt:

$$\frac{\frac{Z_a}{Z_i}}{\frac{C_a}{C_i}} = 1,2 \ bis \ 6,0$$

Bevorzugt 2,9 bis 4,2;

iv) Abtrennen des Kapillarstranges in Solllänge unter Erhalt von Kapillaren mit einem Außendurchmesser $C_a$ und einem Innendurchmesser Ci, für die gilt:

$$\frac{C_a}{C_i} = 1,05 \ bis \ 1,5$$

Bevorzugt 1,08 bis 1,30.

Dabei ist es nicht erforderlich, den Quarzglas-Hohlzylinder, wie im Stand der Technik üblicherweise ausgeführt, zunächst thermisch zu strecken und in einem gesonderten Schritt weiterzuverarbeiten, somit eine stufenweise Verarbeitung zu Kapillaren vorzunehmen. Stattdessen ist es erfindungsgemäß, den mechanisch hergestellten Zylinder direkt und ohne Zwischenschritt durch kontinuierliches Erwärmen, Nachschieben und Ausziehen, bis zum Kapillarstrang auszuziehen.

Die Erfinder der vorliegenden Erfindung haben überraschend herausgefunden, dass eine direkte Verarbeitung eines Quarzglas-Hohlzylinders zu einem Kapillarstrang ohne zusätzliche thermische Behandlungsschritte des Quarzglas-Hohlzylinders für einen bestimmten Dimensionsbereich von Quarzglas-Hohlzylinder und Kapillarstrang möglich ist. Das bedeutet, das erfindungsgemäße Verfahren wird bevorzugt mit Quarzglas-Hohlzylindern ausgeführt, die bestimmte Au-ßen- und Innendurchmesser aufweisen und führt zu Kapillarsträngen beziehungsweise nach dem Abtrennen in Solllänge zu Kapillaren, die ebenfalls bestimmte Außen- und Innendurchmesser aufweisen. Erfindungsgemäß gilt dabei, dass das Verhältnis zwischen Außen- und Innendurchmesser des Quarzglas-Hohlzylinders im Verhältnis zur Beziehung zwischen dem Au-ßen- und Innendurchmesser des Kapillarstrangs zwischen 1,2 und 6,0 liegt, also beispielsweise zwischen 1,2 und 6,0 oder zwischen 1,5 und 5,5 oder zwischen 1,8, und 5,0 oder zwischen 2,0, und 4,8 oder zwischen 2,5, und 4,5, oder zwischen 2,0 und 4,2, bevorzugt zwischen 2,9 und 4,2. Es gilt also:

$$\frac{\frac{Z_a}{Z_i}}{\frac{C_a}{C_i}} = 1,2 \ bis \ 6$$

Die erfindungsgemäßen Kapillaren beziehungsweise Kapillarstränge, die mit dem erfindungsgemäßen Verfahren erhalten werden können, zeichnen sich durch ein Verhältnis des Außen- und des Innendurchmessers aus, bei dem der Außendurchmesser 1,05- bis 1,5-mal größer ist als der Innendurchmesser, er liegt also bei größer als 1,05, 1,10, 1,15, 1,20, 1,25, oder bis zu 1,30, 1,35, 1,40 1,45 oder bis zu 1,50, sodass schließlich gilt:

$$\frac{c_a}{c_i} = 1,05 \ bis \ 1,5.$$

Bevorzugt gilt schließlich für das Außen- und Innendurchmesserverhältnis der Kapillaren bzw. Kapillarstränge ein Wert zwischen 1,08 und 1,30.

Im Sinne der Erfindung werden diese Dimensionen bevorzugterweise mit solchen mechanisch hergestellten Quarzglas-Hohlzylindern ausgeführt, die über verhältnismäßig große Außen und Innendurchmesser gegenüber üblicherweise im Stand der Technik verwendeten Halbzeugen verfügen.

Der Außendurchmesser $Z_a$ von Quarzglas-Hohlzylindern, die besonders gut für das erfindungsgemäße Verfahren geeignet sind, liegt zwischen 120 mm und 250 mm, also z. B. bei größer als 120 mm, 125 mm, 130 mm, 135 mm, 140 mm, 145 mm oder bei größer als 150 mm, 155 mm, 160 mm, 165 mm, 170 mm, 175 mm oder bei größer als 180 mm, 185 mm, 190 mm, 195 mm, 200 mm oder bei bis zu 205 mm, 210 mm, 215 mm, 220 mm, 225 mm oder bei bis zu 230 mm, 235 mm, 240 mm, 245 mm oder bei bis zu 250 mm, bevorzugt liegt der Außendurchmesser zwischen 150 und 200 mm.

Der Innendurchmesser $Z_i$ von Quarzglas-Hohlzylindern, die besonders gut für das erfindungsgemäße Verfahren geeignet sind, liegt zwischen 20 mm und 140 mm, also z. B. bei größer als 20 mm, 25 mm, 30 mm, 35 mm, 40 mm, 45 mm oder bei größer als 50 mm, 55 mm, 60 mm, 65 mm, 70 mm, 75 mm, 80 mm, 85 mm, 90 mm oder bei bis zu 95 mm, 100 mm, 105 mm, 110 mm, 115 mm, 120 mm oder bei bis zu 125 mm, 130 mm, 135 mm, oder 140 mm, bevorzugt liegt der Außendurchmesser zwischen 35 und 90 mm.

Erfindungsgemäß werden Innen- und Außendurchmesser der Quarzglas-Hohlzylinder in der Art ausgewählt, dass das Verhältnis zwischen Außendurchmesser und Innendurchmesser zwischen 1,8 und 5,0 liegt, also bei beispielsweise größer als 1,8, 1,9, 2,0 oder bei größer als 2,1, 2,2, 2,3, 2,4 oder bei größer als 2,5, 2,6, 2,7, 2,8, 2,9 oder bei bis zu 3,0, 3,1, 3,2, 3,3, 3,4 oder bei bis zu 3,5, 3,6, 3,7, 3,8, 3,9 oder bei bis zu 4,0, 4,1, 4,2, 4,3, 4,4 oder bei bis zu 4,5, 4,6, 4,7, 4,8, 4,9 oder bei bis zu 5,0 das also gilt:

$$\frac{z_a}{z_i} = 1{,}8 \ bis \ 5{,}0.$$

Bevorzugt liegt das Verhältnis zwischen Außendurchmesser und Innendurchmesser der Quarzglas-Hohlzylinder die mit dem erfindungsgemäßen Verfahren zu Kapillaren verarbeitet werden zwischen 1,8 und 3,0.

Das erfindungsgemäße Verfahren ermöglicht es den zuvor ausschließlich mechanisch behandelten Quarzglas-Hohlzylinder mit den beschriebenen Dimensionen zu Kapillarsträngen, beziehungsweise nach Abtrennen in Solllänge zu Kapillaren weiterzuverarbeiten, die ebenfalls charakteristische Dimensionen aufweisen.

Der Außendurchmesser $C_a$ von Kapillaren, die besonders durch das erfindungsgemäße Verfahren erhalten werden können, liegen zwischen 2,0 mm und 20,0 mm, also zum Beispiel bei größer als 2,0 mm, 2,5 mm, 3,0 mm, 3,5 mm, 4,0 mm, 4,5 mm oder bei größer als 5,0 mm, 5,5 mm, 6,0 mm, 6,5 mm, 7,0 mm oder bei größer als 7,5 mm, 8,0 mm, 8,5 mm, 9,0 mm, 9,5 mm oder bei größer als 10,0 mm, 10,5 mm, 11,0 mm, 11,5 mm, 12,0 mm oder bei größer als 12,5 mm, 13,0 mm, 13,5 mm, 14,0 mm, 14,5 mm oder bei größer als 15,0 mm, 15,5 mm, 16,0 mm, 16,5 mm oder bei bis zu 17,0 mm, 17,5 mm, 18,0 mm, 18,5 mm, 19,0 mm, 19,5 mm oder bei bis zu 20,0 mm, bevorzugt zwischen 2,5 und 17,0 mm.

Der Innendurchmesser $C_i$ von Kapillaren, die besonders durch das erfindungsgemäße Verfahren erhalten werden können, liegen zwischen 1,0 mm und 17,0 mm, also zum Beispiel bei größer als 1,0 mm, 1,5 mm, 2,0 mm oder bei größer als 2,5 mm, 3,0 mm, 3,5 mm, 4,0 mm, 4,5 mm oder bei größer als 5,0 mm, 5,5 mm, 6,0 mm, 6,5 mm, 7,0 mm oder bei größer als 7,5 mm, 8,0 mm, 8,5 mm, 9,0 mm, 9,5 mm oder bei größer als 10,0 mm, 10,5 mm, 11,0 mm, 11,5 mm, 12,0 mm oder bei größer als 12,5 mm, 13,0 mm, 13,5 mm, 14,0 mm, 14,5 mm, 15,0 mm oder bei bis zu 15,5 mm, 16,0 mm, 16,5 mm oder bei bis zu 17,0 mm bevorzugt zwischen 1,0 und 15,5 mm.

Die Erfinder der vorliegenden Erfindung haben überraschend festgestellt, dass unerwünschtes Kollabierverhalten der Kapillaren weniger mit deren Außendurchmesser und stärker mit ihrem Innendurchmesser zusammenhängt. Es wurde insbesondere gezeigt, dass Kapillarstränge und/oder Kapillaren mit einem Innendurchmesser von weniger als 20 mm dazu neigen unerwünscht zu kollabieren, sodass das OD/ID-Verhältnis zunimmt, wenn sie weiter verjüngt werden sollen. Wenn das Verhältnis von Außen- und Innendurchmessern bei solchen Systemen konstant bleiben oder verkleinert werden soll, muss ein innseitiger Blasdruck angelegt werden, der mindestens dem Gleichgewichtsdruck des Kapillarstrangs entspricht.

Es ist den Erfindern des erfindungsgemäßen Verfahrens also überraschend gelungen ein Verfahren bereitzustellen, welches ein breites Spektrum an unterschiedlich dimensionierten Kapillaren aus Quarzglas-Hohlzylindern produzieren kann. Es ist dabei nicht erforderlich, einen Zwischenschritt mit einer thermischen Behandlung des Quarzglas-Hohlzylinders auszuführen, sondern der mechanisch hergestellte Zylinder wird direkt zu Kapillaren weiterverarbeitet. Die Erfinder konnten überraschenderweise feststellen, dass diese Vereinfachung gegenüber dem Stand der Technik möglich ist, wenn Halbzeuge mit den obenstehend beschriebenen Dimensionen verarbeitet werden.

Im Sinne des erfindungsgemäßen Verfahrens wird ein Quarzglas-Hohlzylinder zum einen mit einer bestimmten Geschwindigkeit, der Nachführrate, einer Heizzone zugeführt und zum anderen mit einer bestimmten Geschwindigkeit kollabiert beziehungsweise elongiert oder ausgezogen, der Ziehgeschwindigkeit.

Erfindungsgemäß hängen dies Nachführrate und die Ziehgeschwindigkeit mit den Dimensionen des Quarzglas-Hohlzylinders und den Zieldimensionen des Kapillarstrangs zusammen.

Im Sinne der Erfindung beträgt die Ziehgeschwindigkeit des Quarzglas-Hohlzylinders zum Kapillarstrang zwischen 1,0 m/min und 6,0 m/min, also beispielsweise bei größer als 1,0 m/min, 1,1 m/min, 1,2 m/min, 1,3 m/min, 1,4 m/min oder bei größer als 1,5 m/min, 1,6 m/min, 1,7 m/min, 1,8 m/min, 1,9 m/min oder bei größer als 2,0 m/min, 2,1 m/min, 2,2 m/min, 2,3 m/min, 2,4 m/min oder bei größer als 2,5 m/min, 2,6 m/min, 2,7 m/min, 2,8 m/min, 2,9 m/min oder bei bis zu 3,0 m/min, 3,1 m/min, 3,2 m/min, 3,3 m/min, 3,4 m/min oder bei bis zu 3,5 m/min, 3,6 m/min, 3,7 m/min, 3,8 m/min, 3,9 m/min oder bei bis zu 4,0 m/min, 4,1 m/min, 4,2 m/min, 4,3 m/min, 4,4 m/min oder bei bis zu 4,5 m/min, 4,6 m/min, 4,7 m/min, 4,8 m/min, 4,9 m/min oder bei bis zu 5,0 m/min, 5,1 m/min, 5,2 m/min, 5,3 m/min, 5,4 m/min oder bei bis zu 5,5 m/min, 5,6 m/min, 5,7 m/min, 5,8 m/min, 5,9 m/min oder bei bis zu 6,0 m/min.

Dabei wird kontinuierlich Quarzglas-Hohlzylindermaterial der Heizzone zugeführt, sodass das erfindungsgemäße Verfahren industriell anwendbar ist. Nachführrate, mit welcher der Quarzglas-Hohlzylinder in die Heizzone geführt wird, liegt erfindungsgemäß bei 1,1 mm/min bis hin zu 1,5 mm/min, also beispielsweise bei größer als 1,1 mm/min, 1,2 mm/min, 1,3 mm/min oder bei bis zu 1,4 mm/min oder bei bis zu 1,5 mm/min.

Das erfindungsgemäße Verfahren ermöglicht es also, den Quarzglas-Hohlzylinder mit den erfindungsgemäß vorzuziehenden Dimensionen mit einer bestimmten Geschwindigkeit einer Heizzone zuzuführen und anschließend mit verhältnismäßig hoher Geschwindigkeit Kapillarstrang von konstanter hoher Qualität mit gleichbleibenden Zieldimensionen aus erweichten zylindermaterial abzuziehen.

Im Sinne der vorliegenden Erfindung wird bei dem Ausziehen des Quarzglas-Hohlzylinder zu einem Kapillarstrang 3,5 kg/h bis 6,0 kg/h des Zylindermaterials verbraucht, das bedeutet es werden beispielsweise bei größer als 3,5 kg/h, 3,6 kg/h, 3,7 kg/h, 3,8 kg/h, 3,9 kg/h oder bei größer als 4,0 kg/h, 4,1 kg/h, 4,2 kg/h, 4,3 kg/h, 4,4 kg/h oder bei größer als 4,5 kg/h, 4,6 kg/h, 4,7 kg/h, 4,8 kg/h, 4,9 kg/h oder bei größer als 5,0 kg/h, 5,1 kg/h, 5,2 kg/h oder bei bis zu 5,3 kg/h, 5,4 kg/h oder bei bis zu 5,5 kg/h, 5,6 kg/h, 5,7 kg/h, 5,8 kg/h, 5,9 kg/h oder bei bis zu 6,0 kg/h des Zylindermaterials zu Kapillarstrang ausgezogen, bevorzugt werden 3,9 bis 5,3 kg/h des Quarzglas-Hohlzylinders zu Kapillarstrang ausgezogen.

Weiterhin ermöglicht es das erfindungsgemäße Verfahren Quarzglas-Hohlzylinder mit einer Querschnittsfläche von 10000 mm$^2$ bis 31000 mm$^2$ zu Kapillaren beziehungsweise Kapillarsträngen weiterzuverarbeiten, die eine Querschnittsfläche von 2 mm$^2$ bis 40 mm$^2$ aufweisen.

Es können also Quarzglas-Hohlzylinder mit einer Querschnittsfläche von größer als 10000 mm$^2$, 11000 mm$^2$, 12000 mm$^2$, 13000 mm$^2$, 14000 mm$^2$ oder von größer als 15000 mm$^2$, 16000 mm$^2$, 17000 mm$^2$, 18000 mm$^2$, 19000 mm$^2$ oder von größer als 20000 mm$^2$, 21000 mm$^2$, 22000 mm$^2$, 23000 mm$^2$ oder von bis zu 24000 mm$^2$, 25000 mm$^2$, 26000 mm$^2$, 27000 mm$^2$, 28000 mm$^2$, 29000 mm$^2$, 30000 mm$^2$ oder von bis zu 31000 mm$^2$ mit dem erfindungsgemäßen Verfahren verarbeitet werden, wobei Kapillaren beziehungsweise Kapillarstränge mit einer Querschnittsfläche von größer als 2 mm$^2$, 3 mm$^2$, 4 mm$^2$ oder von größer als 5 mm$^2$, 6 mm$^2$, 7 mm$^2$, 8 mm$^2$, 9 mm$^2$ oder von größer als 10 mm$^2$, 11 mm$^2$, 12 mm$^2$, 13 mm$^2$, 14 mm$^2$ oder von größer als 15 mm$^2$, 16 mm$^2$, 17 mm$^2$, 18 mm$^2$, 19 mm$^2$ oder von größer als 20 mm$^2$, 21 mm$^2$, 22 mm$^2$, 23 mm$^2$, 24 mm$^2$ oder von größer als 25 mm$^2$, 26 mm$^2$, 27 mm$^2$, 28 mm$^2$, 29 mm$^2$ oder von bis zu 30 mm$^2$, 31 mm$^2$, 32 mm$^2$, 33 mm$^2$, 34 mm$^2$ oder von bis zu 35 mm$^2$, 36 mm$^2$, 37 mm$^2$, 38 mm$^2$, 39 mm$^2$ oder von bis zu 40 mm$^2$ erhalten werden.

Ein großer Vorteil des erfindungsgemäßen Verfahrens ist es, dass aus einem relativ geringen Anteil der verhältnismäßig großen Quarzglas-Hohlzylinder bereits große Mengen von Kapillaren hergestellt werden können. Die im Vergleich zum Stand der Technik besonders großen Quarzglas-Hohlzylinder ermöglichen einen hohen Kapillarertrag, bei welchem qualitativ konstant hochwertige Kapillaren erhalten werden. Dies ist zum einen dadurch bedingt, dass die Größe des Halbzeugs zu konstanteren Druckverhältnissen während des Verfahrens führt. Beim Abschneiden von Kapillaren in Solllänge geht nur ein prozentual geringer Anteil des ggf. unter Überdruck stehenden Systems verloren, da zum einen das Halbzeug selbst, aber auch die Strecke, über die es ausgezogen wird, deutlich länger sind als die Solllänge der Kapillaren. Beispielsweise schwankt der Druck in einem 5 m langen System um 20 %, wenn ein 1 m langer Kapillarabschnitt davon abgetrennt wird. Handelt es sich jedoch um ein 10 m langes System, schwankt der Druck beim Abtrennen eines 1 m langen Kapillarabschnitts nur noch um 10 %. Durch die erfindungsgemäß besonders langen Halbzeuge und Ausziehstrecken ist die Produktion also stabiler, die Qualität der Kapillaren schwankt nicht aufgrund von Druckschwankungen während des Ausziehens. Des Weiteren übertragen sich über die Länge des Systems auch nicht die Erschütterungen, die gegebenenfalls beim Abtrennen der Kapillare in Solllänge auftreten. Dadurch werden Beschädigungen des noch weiter auszuziehenden Materials vermieden.

Das erfindungsgemäße Verfahren gewährt eine industriell attraktive Durchsatzrate und damit zusammenhängend sind die oben beschriebenen verhältnismäßig schnellen Ziehgeschwindigkeiten erforderlich. Der Kapillarstrang, der mit solchen Geschwindigkeiten abgezogen wird, wird bevorzugt entlang einer verhältnismäßig langen Zugstrecke mit dem erfindungsgemäßen Verfahren abgezogen. Die Zugstrecke, die erfindungsgemäß hinter der Heizzone liegt, weist im Sinne der Erfindung eine Länge zwischen 1,0 m und 8,0 m, also beispielsweise länger als 1,0 m, 2,0 m, 3,0 m oder länger als 4,0 m, 5,0 m oder bis zu 6,0 m, bis zu 7,0 m oder bis zu 8,0 m auf. Bevorzugt ist eine Zugstrecke von 1,5 m bis 6,0 m.

Im Sinne der Erfindung ist es bevorzugt, wenn der Kapillarstrang während des Ausziehvorgangs gegenüber mechanischen Vibrationen oder anderen, sich möglicherweise beschädigend auswirkenden Einflüssen stabilisiert wird. Im Sinne der Erfindung ist es daher bevorzugt, wenn der Kapillarstrang mechanisch stabilisiert wird. Dies kann beispielsweise mithilfe von zusätzlichen Rädern erfolgen, über welche der ausgezogene Kapillarstrang in horizontaler oder auch vertikaler Lage während des Ausziehens geführt wird.

Ein erfindungsgemäß besonders bevorzugter Schritt ist es, das Außen- und Innendurchmesserverhältnis zwischen dem Quarzglas-Hohlzylinder und der Kapillare während des erfindungsgemäßen Verfahrens zu ändern. In herkömmlichen Verfahren, wie sie im Stand der Technik bekannt sind, ändert sich das Verhältnis des Außendurchmessers zum Innendurchmesser bei der Verarbeitung eines Glaszylinders zu einer Kapillare nicht oder nicht signifikant. Das erfindungsgemäße Verfahren sieht vor, dass sich das Verhältnis der Innen- und Außendurchmesser bei der Verarbeitung des Quarzglashohlzylinders ändert. Dazu ist es prinzipiell möglich, die innseitig in Hohlzylinder und Kapillarstrang herrschenden Druckverhältnisse zu beeinflussen, um ein Inverses Kollabieren beim Elongieren oder Ausziehen zu erreichen.

Es ist daher beispielsweise im Sinne der Erfindung möglich, während der Anwendung des erfindungsgemäßen Verfahrens einen innseitigen Blasdruck p$^+$ an den Quarzglas-Hohlzylinder anzulegen. Dadurch wird einerseits dem Kollabierdruck des Kapillarstrangs entgegengewirkt und eine wünschenswerte, runde Geometrie des Kapillarstrangs, und damit auch der daraus in Solllänge abgetrennten Kapillaren, wird stabilisiert. Kollabierdruck beschreibt die Tendenz der des Kapillarstrangs bei dem erfindungsgemäßen Führen durch die Heizzone und damit verbundenem Elongieren unkontrolliert in sich zusammenzufallen. Beispielsweise ist es erfindungsgemäß möglich, den elongierten Kapillarstrang stirnseitig zuzuschmelzen oder mit einer geeigneten Masse abzudichten und anschließend mittels eines geeigneten Gases einen Druck anzulegen. Andererseits kann mittels des angelegten Drucks auch eine gewünschte Geometrie der Kapillaren erreicht werden, etwa indem die Antiresonanzelement-Vorformlinge durch den angelegten Druck von innen geweitet werden, umso bevorzugt eine runde Geometrie zu stabilisieren. Des Weiteren ist es durch die Steuerung der Druckverhältnisse erfindungsgemäß möglich, das Verhältnis zwischen Außen- und Innendurchmesser zu verändern.

Wird ein Blasdruck p$^+$ angelegt, so liegt sein Wert zwischen dem Gleichgewichtsdruck des Quarzglas-Hohlzylinders p$_z$ und dem Gleichgewichtsdruck des Kapillarstrangs p$_c$. Der Gleichgewichtsdruck, hier einmal allgemein als P$_{EQ}$ bezeichnet, wird durch den folgenden Zusammenhang verdeutlicht:

$$p_{GGW} = \left(\frac{1}{r_A^2} + \frac{1}{r_i^2}\right) * h$$

worin r$_A$ den Außenradius des rohrförmigen Elements, r$_i$ den Innenradius des rohrförmigen Elements und η die Oberflächenspannung des rohrförmigen Elements bezeichnet.

Wenn im Sinne des erfindungsgemäßen Verfahrens ein Blasdruck p$^+$ angelegt wird, dann wird dies bevorzugt mithilfe eines geeigneten Gases oder Gasgemisches, welches innseitig durch den Quarzglas-Hohlzylinder geführt wird, ausgeführt. Solche Gase oder Gasgemische umfassen beispielsweise trockene Luft, Stickstoff, Argon und/oder Helium, wobei trockene Luft bevorzugt wird.

Ein Überdruck kann insbesondere dann vorteilhaft sein, wenn kleine Innendurchmesser unter 20 mm in den erfindungsgemäßen Kapillaren erreicht werden sollen. Wie bereits erwähnt konnten die Erfinder des Verfahrens herausfinden, dass Kollabierdruck der Kapillaren insbesondere vom Innendurchmesser abhängig ist. Bei größeren Innendurchmessern über 30 mm lässt sich problemlos ein Verhältniszug, also ein Elongieren, bei dem das Verhältnis zwischen Außen und Innendurchmesser zwischen Quarzglas-Hohlzylinder und Kapillarstrang annähernd gleichbleibt, ausführen. Kleinere Innendurchmesser können hingegen durch den Überdruck stabilisiert werden.

Ist durch das Ausführen dieser gegebenenfalls bevorzugten Verfahrensschritte im Sinne des erfindungsgemäßen Verfahrens ein Kapillarstrang mit den gewünschten Dimensionen aus einem Quarzglas-Hohlzylinder gezogen worden, werden daraus in Kapillaren in einer Solllänge abgetrennt. Das Abtrennen kann erfindungsgemäß auf alle denkbaren Weisen erfolgen, die zu einer Abtrennfläche führen, welche die gewünschten oder benötigten Flächeneigenschaften für die Kapillare aufweist. Davon sind insbesondere Abschneiden, Absägen, Abbrechen und Mischungen davon, wie zum Beispiel ein umfängliches Ansägen und anschließendes Abbrechen, umfasst.

Das erfindungsgemäße Verfahren ermöglicht es also, in einem kontinuierlichen und industriell attraktiven Maßstab aus großen, mechanisch bearbeiteten Quarzglas-Hohlzylindern Kapillaren in gleichbleibender Qualität herzustellen. Das Verfahren ist durch einen Verhältnisbereich zwischen dem Verhältnis der Außen und Innendurchmesser des Quarzglas-Hohlzylinders und der Kapillaren gekennzeichnet. Dieses Verhältnis kann im Sinne der Erfindung durch das Anlegen eines Blas- oder auch Unterdrucks stärker variiert werden, als dies im Stand der Technik üblich ist. Dadurch, dass es kontinuierlich mit großen Halbzeugen ausgeführt wird, erzeugt das erfindungsgemäße Verfahren nur wenige Gew.-% des Quarzglashohlzylinders an Ausschuss, bevor ein Gleichgewicht eingestellt wird, bei dem ein Kapillarstrang mit kontinuierlichen Dimensionen abgezogen werden kann. Eine besonders bevorzugte Verfahrensvariante des erfindungsgemäßen Verfahrens umfasst die folgenden Schritte:

i) Bereitstellen eines Quarzglas-Hohlzylinders mit einem Außendurchmesser Z$_a$, von 120 mm bis 250 mm und einem Innendurchmesser Z$_i$ von 20 mm bis 140 mm;

ii) Kontinuierliches Zuführen des Quarzglas-Hohlzylinders mit einer Nachführrate von 0,3 mm/min bis 3 mm/min in eine Heizzone, bis der Quarzglas-Hohlzylinder darin bereichsweise erweicht wird;

iii) Inverses Kollabieren und gleichzeitiges Elongieren des Quarzglas-Hohlzylinders aus dem erweichten Bereich mit einer Ziehgeschwindigkeit von 1 m/min bis 6 m/min währenddessen ein innseitiger Blasdruck p$^+$ angelegt wird, um einen Kapillarstrang mit einem Außendurchmesser C$_a$ und einem Innendurchmesser Ci zu erhalten, dadurch gekennzeichnet, dass sich das Außen- und Innendurchmesserverhältnis des Zylinders während des Inversen Kollabierens und gleichzeitigen Elongierens zur Kapillare so verändert, das gilt:

$$\frac{\frac{z_a}{z_i}}{\frac{c_a}{c_i}} = 2{,}9 \ bis \ 4{,}2;$$

iv) Abtrennen des Kapillarstranges in Solllänge unter Erhalt von Kapillaren mit einem Außendurchmesser $C_a$ und einem Innendurchmesser Ci, für die gilt:

$$\frac{c_a}{c_i} = 1{,}05 \ bis \ 1{,}5.$$

## III. Erzeugnisse

Die vorliegende Erfindung betrifft weiterhin Kapillaren, die beispielsweise mithilfe des erfindungsgemäßen Verfahrens hergestellt werden können. Im Sinne der Erfindung sind die Kapillaren über das Verhältnis ihres Außendurchmessers zu ihrem Innendurchmesser charakterisierbar:

$$\frac{c_a}{c_i} = 1{,}05 \ bis \ 1{,}5,$$

Im Sinne der Erfindung weisen diese Kapillaren weiterhin einen Gleichgewichtsdruck $p_c$ auf, der zwischen 50 Pa und 800 pa liegt, also beispielsweise bei größer als 50 Pa, 51 Pa, 52 Pa, 53 Pa, 54 Pa oder bei größer als 55 Pa, 56 Pa, 57 Pa, 58 Pa, 59 Pa oder bei größer als 60 Pa, 61 Pa, 62 Pa, 63 Pa, 64 Pa oder bei größer als 65 Pa, 66 Pa, 67 Pa, 68 Pa, 69 Pa oder bei größer als 70 Pa, 71 Pa, 72 Pa, 73 Pa, 74 Pa oder bei größer als 75 Pa, 76 Pa, 77 Pa, 78 Pa, 79 Pa oder bei größer als 80 Pa, 81 Pa, 82 Pa, 83 Pa, 84 Pa oder bei größer als 85 Pa, 86 Pa, 87 Pa, 88 Pa, 89 Pa oder bei größer als 90 Pa, 91 Pa, 92 Pa, 93 Pa, 94 Pa oder bei größer als 95 Pa, 96 Pa, 97 Pa, 98 Pa, 99 Pa oder bei bis zu 100 Pa, 110 Pa, 120 Pa, 130 Pa, 140 Pa oder bei bis zu 150 Pa, 160 Pa, 170 Pa, 180 Pa, 190 Pa oder bei bis zu 200 Pa, 210 Pa, 220 Pa, 230 Pa, 240 Pa oder bei bis zu 250 Pa, 260 Pa, 270 Pa, 280 Pa, 290 Pa oder bei bis zu 300 Pa, 310 Pa, 320 Pa, 330 Pa, 340 Pa oder bei bis zu 350 Pa, 360 Pa, 370 Pa, 380 Pa, 390 Pa oder bei bis zu 400 Pa, 410 Pa, 420 Pa, 430 Pa, 440 Pa oder bei bis zu 450 Pa, 460 Pa, 470 Pa, 480 Pa, 490 Pa oder bei bis zu 500 Pa, 510 Pa, 520 Pa, 530 Pa, 540 Pa oder bei bis zu 550 Pa, 560 Pa, 570 Pa, 580 Pa, 590 Pa oder bei bis zu 600 Pa, 610 Pa, 620 Pa, 630 Pa, 640 Pa oder bei bis zu 650 Pa, 660 Pa, 670 Pa, 680 Pa, 690 Pa oder bei bis zu 700 Pa, 710 Pa, 720 Pa, 730 Pa, 740 Pa oder bei bis zu 750 Pa, 760 Pa, 770 Pa, 780 Pa, 790 Pa oder bei bis zu 800 Pa.

Die erfindungsgemäßen Erzeugnisse werden üblicherweise im Bereich zwischen 1800 °C und 2200 °C, also bei größer als 1800 °C, 1810 °C, 1820 °C, 1830 °C, 1840 °C oder bei größer als 1850 °C, 1860 °C, 1870m °C, 1880 °C, 1890 °C oder bei größer als 1900 °C, 1910 °C, 1920 °C, 1930 °C, 1940 °C oder bei größer als 1950 °C, 1960 °C, 1970m °C, 1980 °C, 1990 °C oder bei bis zu 2000 °C, 2010 °C, 2020 °C, 2030 °C, 2040 °C oder bei bis zu 2050 °C, 2060 °C, 2070m °C, 2080 °C, 2090 °C oder bei bis zu 2100 °C, 2110 °C, 2120 °C, 2130 °C, 2140 °C oder bei bis zu 2150 °C, 2160 °C, 2170m °C, 2180 °C, 2190 °C oder bei bis zu 2200 °C, bevorzugt zwischen 1950 °C und 2100 °C aus Halbzeugen ausgezogen.

Der Gleichgewichtsdruck der Kapillare $p_c$ ergibt sich aus der Beziehung

$$p_c = \left(\frac{1}{r_{Ac}^2} + \frac{1}{r_{ic}^2}\right) * h_c$$

worin $r_{Ac}$ den Außenradius der Kapillare, $r_{ic}$ den Innenradius der Kapillare und $\eta_c$ die Oberflächenspannung der Kapillare bezeichnet. Erfindungsgemäße Kapillaren weisen charakteristische Gleichgewichtsdrücke auf, da ihre Dimensionierung hinsichtlich der Außen- sowie Innendurchmesser und damit auch der entsprechenden Radien von den verarbeiteten Hohlzylindern abhängen, da das dimensionale Verhältnis zwischen Halbzeug und Verfahrensprodukt für die Anwendbarkeit des erfindungsgemäßen Verfahrens von hoher Bedeutung ist.

Kapillaren, die mit dem erfindungsgemäßen Verfahren hergestellt werden, zeichnen sich durch eine sehr geringe Ovalität aus, sind im Umkehrschluss also zumindest nahezu kreisrund, da das erfindungsgemäße Verfahren eine ausgezeichnete Kontrolle über die Geometrie gewährt, was zum einen auf die großdimensionierten Halbzeuge (Quarzglas-Hohlzylinder) und zum anderen auf die Möglichkeit der Druckkontrolle zurückzuführen ist.

Prinzipiell sind mechanisch hergestellte Quarzglas-Hohlzylinder vor der Verarbeitung zunächst kreisrund. Bei dem Elongieren und Kollabieren oder Inversen Kollabieren durch die Heizzone, bei dem Kapillaren geformt werden, kann die runde Form des Querschnitts jedoch eine ovale Form annehmen, die durch eine lange Achse und durch eine kurze Achse gekennzeichnet ist. Der mittlere Außendurchmesser einer solchen, eher ovalen Kapillare ergibt sich dann gemäß der folgenden Formel:

$$mittlerer\ Au\ss endurchmesser = \frac{l_{Lange\ Achse}[mm] + l_{Kurze\ Achse}[mm]}{2}$$

Für das Verhältnis zwischen der langen und der kurzen Achse, also der Frage, ob der Querschnitt rund oder eher oval ist, gilt:

$$Verh\ddot{a}ltnis_{Achsen} = \frac{l_{Lange\ Achse}[mm]}{l_{Kurze\ Achse}[mm]}$$

Dabei sind Werte die näher an 1 liegen charakteristisch für runde Geometrien und größere Werte drücken höhere Verformungen aus. Kapillaren, die mit dem erfindungsgemäßen Verfahren hergestellt werden, sind dadurch gekennzeichnet, dass sie besonders runde Geometrien erreichen, das Achsenverhältnis liegt zwischen 1,00 und 1,02, also größer gleich 1,00 bis zu 1,02.

Erfindungsgemäß lässt sich das Verhältnis zwischen den Achsengrößen beispielsweise bestimmen, indem die Querschnittsfläche der Kapillaren mit einem optischen Mikroskop untersucht und die Aufnahmen mittels einer geeigneten Software ausgewertet werden. Weiterhin denkbar sind auch elektrooptische Entfernungsmessungen mit geeigneten Laservorrichtungen.

Erfindungsgemäße Kapillaren zeichnen sich also durch mindestens einen der Dimensionsparameter aus, die für die Herstellung mit dem erfindungsgemäßen Verfahren üblich sind. Besonders bevorzugte erfindungsgemäße Kapillaren zeichnen sich durch einen Außendurchmesser $C_a$ und einen Innendurchmesser Ci aus, für die gilt:

$$\frac{c_a}{c_i} = 1{,}05\ bis\ 1{,}5,$$

bevorzugt gilt ein Durchmesserverhältnis zwischen 1,08 und 1,30, und
einen Gleichgewichtsdruck $p_c$, der zwischen 50 Pa und 800 Pa liegt und eine besonders runde Geometrie die durch ein Verhältnis der im Querschnitt untersuchten Achsen von 1,00 bis 1,02 liegt.

## BEISPIELE

### I. Verhältniszug und Inverses Kollabieren

Es wurde untersucht, bei welchen Kapillardimensionen das Anlegen eines innseitigen Drucks erforderlich wurde, um eine runde Geometrie des Kapillarstrangs bzw. der Kapillaren zu gewährleisten.

**Tabelle 1.** Außendurchmesser (OD), Innendurchmesser (ID), Außen- und Innendurchmesserverhältnis (OD/ID) sowie Gleichgewichtsdrücke ($p_{EQ}$) bei Temperaturen von ca. 1800 °C bis ca. 2200 °C für verschiedene Quarzglashohlzylinder

| Zylinder | | | | | | |
|---|---|---|---|---|---|---|
| **OD [mm]** | 200,00 | 200,00 | 200,00 | 200,00 | 200,00 | 200,00 |
| **ID [mm]** | 38,00 | 40,00 | 42,00 | 50,00 | 60,00 | 70,00 |
| **OD/ID** | 5,26 | 5,00 | 4,76 | 4,00 | 3,33 | 2,86 |
| **$p_{EQ}$ [Pa]** | 25,99 | 24,90 | 23,91 | 20,75 | 17,98 | 16,01 |

**Tabelle 2.** Außen- und Innendurchmesser und korrespondierende Gleichgewichtsdrücke bei Temperaturen von ca. 1800 °C bis ca. 2200 °C für verschiedene Kapillarsysteme.

| Kapillaren | | | | | | |
|---|---|---|---|---|---|---|
| **OD [mm]** | 5,50 | 5,50 | 5,50 | 5,50 | 5,50 | 5,50 |
| **ID [mm]** | 1,05 | 1,10 | 1,16 | 1,38 | 1,65 | 1,93 |
| **$p_{EQ}$ [Pa]** | 945,17 | 905,45 | 869,52 | 754,55 | 653,94 | 582,08 |
| | | | | | | |

(fortgesetzt)

| Kapillaren | | | | | | |
|---|---|---|---|---|---|---|
| OD [mm] | 8,50 | 8,50 | 8,50 | 8,50 | 8,50 | 8,50 |
| ID [mm] | 1,62 | 1,70 | 1,79 | 2,13 | 2,55 | 2,98 |
| $p_{EQ}$ [Pa] | 611,58 | 585,88 | 562,63 | 488,24 | 423,14 | 376,64 |
| | | | | | | |
| OD [mm] | 20,00 | 20,00 | 20,00 | 20,00 | 20,00 | 20,00 |
| ID [mm] | 3,80 | 4,00 | 4,20 | 5,00 | 6,00 | 7,00 |
| $p_{EQ}$ [Pa] | 259,92 | 249,00 | 239,12 | 207,50 | 179,83 | 160,07 |
| | | | | | | |
| OD [mm] | 50,00 | 50,00 | 50,00 | 50,00 | 50,00 | 50,00 |
| ID [mm] | 9,50 | 10,00 | 10,50 | 12,50 | 15,00 | 17,50 |
| $p_{EQ}$ [Pa] | 103,97 | 99,60 | 95,65 | 83,00 | 71,93 | 64,03 |
| | | | | | | |
| OD [mm] | 60,00 | 60,00 | 60,00 | 60,00 | 60,00 | 60,00 |
| ID [mm] | 11,40 | 12,00 | 12,60 | 15,00 | 18,00 | 21,00 |
| $p_{EQ}$ [Pa] | 86,64 | 83,00 | 79,71 | 69,17 | 59,94 | 53,36 |
| | | | | | | |
| OD [mm] | 80,00 | 80,00 | 80,00 | 80,00 | 80,00 | 80,00 |
| ID [mm] | 15,20 | 16,00 | 16,80 | 20,00 | 24,00 | 28,00 |
| $p_{EQ}$ [Pa] | 64,98 | 62,25 | 59,78 | 51,88 | 44,96 | 40,02 |
| | | | | | | |
| OD [mm] | 110,00 | 110,00 | 110,00 | 110,00 | 110,00 | 110,00 |
| ID [mm] | 20,90 | 22,00 | 23,10 | 27,50 | 33,00 | 38,50 |
| $p_{EQ}$ [Pa] | 47,26 | 45,27 | 43,48 | 37,73 | 32,70 | 29,10 |

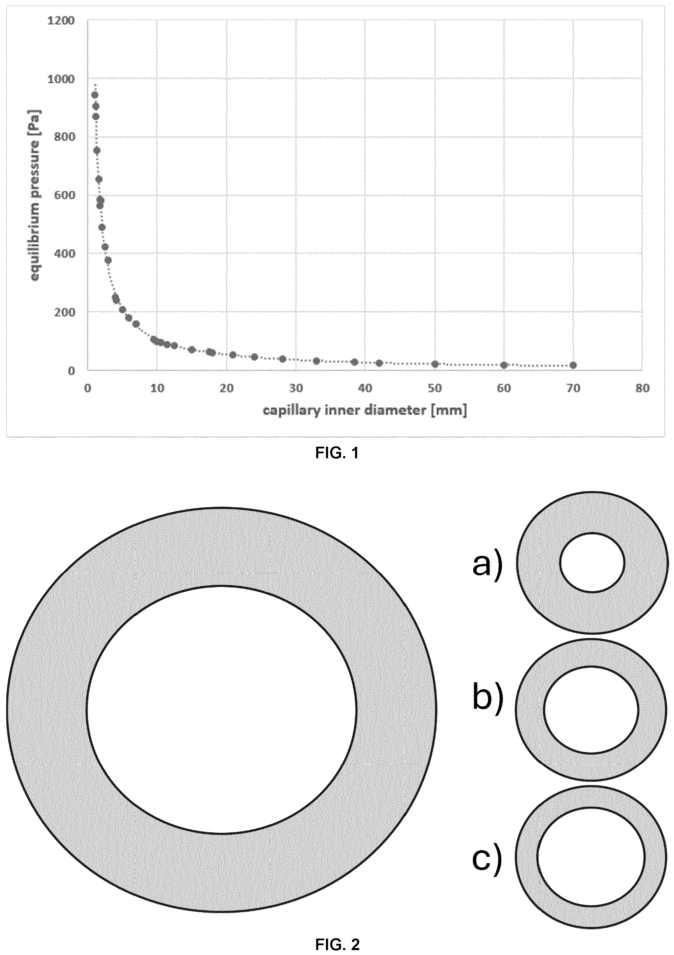

Die Erfinder der vorliegenden Erfindung haben festgestellt, dass die Gleichgewichtsdrücke bei Innendurchmessern, die geringer sind als 20 mm, sprunghaft ansteigen. Um den Verhältniszug aufrechtzuerhalten oder ein Inverses Kollabieren der Kapillaren zu erwirken, wird das Anlegen eines innseitigen Drucks erforderlich (vgl. Figur 1).

II. **Kapillarertrag des erfindungsgemäßen Verfahrens**

Es wurde weiterhin untersucht, welcher Kapillarertrag mit den erfindungsgemäß großen Quarzglashohlzylindern mit dem erfindungsgemäßen Verfahren erzielt werden kann. Dazu wurden Kapillaren verschiedener Dimensionen aus einem definierten Quarzglashohlzylinder hergestellt.

**Tabelle 3.** Übersicht über den Kapillarertrag von 1 m eines Quarzglashohlzylinders mit einem Außendurchmesser von 200,00 mm und einem Innendurchmesser von 70,00 mm für drei verschiedene Kapillardimensionen.

| Zylinder | | | |
|---|---|---|---|
| Ausgangslänge [m] | Außendurchmesser [mm] | Innendurchmesser [mm] | Ertragslänge [m] |
| 1 | 200,00 | 70,00 | - |
| **Kapillare** | | | |
| - | 8,50 | 7,70 | 2700 |
| - | 5,50 | 4,60 | 3860 |

(fortgesetzt)

| Kapillare | | | |
|---|---|---|---|
| - | 3,20 | 2,80 | 14260 |

Neben der erhöhten Prozessstabilität kann also durch den Einsatz erfindungsgemäß großer Quarzglashohlzylinder auch eine hohe Menge an Kapillarmaterial erzeugt werden.

**BESCHREIBUNG DER FIGUREN**

**FIGUR 1** Beziehung zwischen dem Gleichgewichtsdruck bei der Arbeitstemperatur und dem Innendurchmesser des Kapillarstrangs bzw. der Kapillaren. Die Abbildung zeigt einen starken Anstieg des Gleichgewichtsdrucks bei Innendurchmessern von etwa unter 20 mm, aber ein nahezu konstantes Druckverhalten bei darüber liegenden Werten.

**FIGUR 2** Schematische Darstellung der Vorgänge a) Kollabieren, b) Verhältniszug und c) Inverses Kollabieren. Die Abbildungen verdeutlichen, wie sich das Verhältnis zwischen Außen- und Innendurchmessern durch diese Vorgänge ändern kann.

**Patentansprüche**

1. Verfahren zur Herstellung von Kapillaren beziehungsweise Antiresonanzelement-Vorformlingen, umfassend die Schritte:

    i) Bereitstellen eines Quarzglas-Hohlzylinders mit einem großen Außendurchmesser $Z_a$, einem kleinen Innendurchmesser $Z_i$;
    ii) Kontinuierliches Zuführen des Quarzglas-Hohlzylinders in eine Heizzone, bis der Quarzglas-Hohlzylinder darin bereichsweise erweicht wird;
    iii) Inverses Kollabieren und gleichzeitiges Elongieren des Quarzglas-Hohlzylinders aus dem erweichten Bereich, um einen Kapillarstrang mit einem Außendurchmesser $C_a$ und einem Innendurchmesser $C_i$ zu erhalten, **dadurch gekennzeichnet, dass** sich das Außen- und Innendurchmesserverhältnis des Zylinders während des Inversen Kollabierens und gleichzeitigen Elongierens zur Kapillare so verändert, das gilt:

$$\frac{\frac{Z_a}{Z_i}}{\frac{C_a}{C_i}} = 1{,}2\ bis\ 6{,}0$$

    bevorzugt 2,9 bis 4,2;
    iv) Abtrennen des Kapillarstranges in Solllänge unter Erhalt von Kapillaren mit einem Außendurchmesser $C_a$ und einem Innendurchmesser $C_i$, für die gilt:

$$\frac{c_a}{c_i} = 1{,}05\ bis\ 1{,}50$$

    bevorzugt 1,08 bis 1,30.

2. Verfahren gemäß Anspruch 1, **dadurch gekennzeichnet, dass** der Quarzglas-Hohlzylinder ein mechanisch bearbeiteter Quarzglas-Hohlzylinder ist.

3. Verfahren gemäß Anspruch 1 bis 2, **dadurch gekennzeichnet, dass** der Quarzglashohlzylinder nicht thermisch vorbehandelt wurde.

4. Verfahren gemäß Anspruch 1 bis 3, **dadurch gekennzeichnet, dass** der Quarzglas-Hohlzylinder einen großen Außendurchmesser von 120 mm bis 250 mm aufweist, bevorzugt einen Außendurchmesser von 150 mm bis 200 mm aufweist.

5. Verfahren gemäß Anspruch 1 bis 4, **dadurch gekennzeichnet, dass** der Quarzglas-Hohlzylinder einen kleinen Innendurchmesser von 20 mm bis 140 mm aufweist, bevorzugt einen Innendurchmesser von 35 mm bis 90 mm aufweist.

6. Verfahren gemäß Anspruch 1 bis 5, **dadurch gekennzeichnet, dass** für das Verhältnis des Außen- und Innendurchmessers des mechanisch bearbeiteten Quarzglas-Hohlzylinder gilt:

$$\frac{z_a}{z_i} = 1,8 \; bis \; 5,0,$$

Bevorzugt ist, dass der Quarzglas-Hohlzylinder ein Verhältnis des Außen- und Innendurchmessers von 1,8 bis 3,0 aufweist.

7. Verfahren gemäß Anspruch 1 bis 6, **dadurch gekennzeichnet, dass** die Ziehgeschwindigkeit des Kapillarstrangs während des Ziehvorgangs 1 m/min bis 6 m/min beträgt.

8. Verfahren gemäß Anspruch 1 bis 7, **dadurch gekennzeichnet, dass** die Nachführrate des Quarzglas-Hohlzylinders 0,3 mm/min bis 3 mm/min, bevorzugt 1,1 mm/min bis 1,5 mm/min beträgt.

9. Verfahren gemäß Anspruch 1 bis 8, **dadurch gekennzeichnet, dass** während des Ziehvorgangs des Kapillarstrangs aus dem erweichten Quarzglas-Hohlzylinder ein Blasdruck $p^+$ in der Innenbohrung des Quarzglas-Hohlzylinders bzw. des daraus resultierenden Kapillarstrangs erzeugt wird.

10. Verfahren gemäß Anspruch 1 bis 9, **dadurch gekennzeichnet, dass** der Blasdruck mit einem Gas oder Gasgemisch umfassend trockene Luft, Stickstoff, Argon und/oder Helium, bevorzugt mit trockener Luft, erzeugt wird.

11. Verfahren gemäß Anspruch 1 bis 10, **dadurch gekennzeichnet, dass** der Blasdruck zwischen dem Gleichgewichtsdruck des Quarzglas-Hohlzylinders pz und dem Gleichgewichtsdruck des Kapillarstrangs pc liegt.

12. Verfahren gemäß Anspruch 1 bis 11, **dadurch gekennzeichnet, dass** die Heizzone Temperaturen von 1800 °C bis 2200 °C, bevorzugt Temperaturen von 1950 °C bis 2100 °C aufweist.

13. Verfahren gemäß Anspruch 1 bis 12, umfassend die folgenden Schritte:

i) Bereitstellen eines Quarzglas-Hohlzylinders mit einem Außendurchmesser $Z_a$, von 120 mm bis 250 mm und einem Innendurchmesser $Z_i$ von 20 mm bis 140 mm;
ii) Kontinuierliches Zuführen des Quarzglas-Hohlzylinders mit einer Nachführrate von 0,3 mm/min bis 3 mm/min in eine Heizzone, bis der Quarzglas-Hohlzylinder darin bereichsweise erweicht wird;
iii) Inverses Kollabieren und gleichzeitiges Elongieren des Quarzglas-Hohlzylinders aus dem erweichten Bereich mit einer Ziehgeschwindigkeit von 1 m/min bis 6 m/min währenddessen ein innseitiger Blasdruck $p^+$ angelegt wird, um einen Kapillarstrang mit einem Außendurchmesser $C_a$ und einem Innendurchmesser Ci zu erhalten, **dadurch gekennzeichnet, dass** sich das Außen- und Innendurchmesserverhältnis des Zylinders während des Inversen Kollabierens und gleichzeitigen Elongierens zur Kapillare so verändert, das gilt:

$$\frac{\frac{z_a}{z_i}}{\frac{c_a}{c_i}} = 2,9 \; bis \; 4,2;$$

iv) Abtrennen des Kapillarstranges in Solllänge unter Erhalt von Kapillaren mit einem Außendurchmesser $C_a$ und einem Innendurchmesser Ci, für die gilt:

$$\frac{c_a}{c_i} = 1,08 \; bis \; 1,30.$$

14. Eine Kapillare, **dadurch gekennzeichnet, dass** sie

einen Außendurchmesser $C_a$ und einen Innendurchmesser Ci aufweist, für die gilt:

$$\frac{c_a}{c_i} = 1{,}05 \; bis \; 1{,}50,$$

bevorzugt 1,08 bis 1,30, und
dass sie einen Gleichgewichtsdruck pc zwischen 50 Pa und 800 Pa aufweist, und
dass das Verhältnis einer längeren Achse zu einer kürzeren Achse im Querschnitt 1,00 bis 1,02 beträgt.

**15.** Die Kapillare gemäß Anspruch 14, erhältlich nach einem Verfahren gemäß Anspruch 1 bis 13.

FIG. 1

FIG. 2

## EUROPÄISCHER RECHERCHENBERICHT

Nummer der Anmeldung

EP 25 15 3887

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 112 323 A1 (HERAEUS QUARZGLAS [DE]) 4. Januar 2017 (2017-01-04) * Absätze [0052] - [0053]; Ansprüche; Abbildungen 1-2 * ----- | 1-15 | INV. C03B23/047 C03B23/07 C03B37/012 |
| X,D | CN 113 651 527 A (YANGTZE OPTICAL FIBRE & CABLE JOINT STOCK LTD CO) 16. November 2021 (2021-11-16) * Beispiele * ----- | 1-15 | |
| A | EP 4 015 475 A1 (HERAEUS QUARZGLAS [DE]) 22. Juni 2022 (2022-06-22) * Absatz [0088] * ----- | 1-15 | |

RECHERCHIERTE SACHGEBIETE (IPC)

C03B

Der vorliegende Recherchenbericht wurde für alle Patentansprüche erstellt

| Recherchenort | Abschlußdatum der Recherche | Prüfer |
|---|---|---|
| Den Haag | 11. Juni 2025 | Creux, Sophie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

# EP 4 737 405 A1

**ANHANG ZUM EUROPÄISCHEN RECHERCHENBERICHT**
**ÜBER DIE EUROPÄISCHE PATENTANMELDUNG NR.**   EP 25 15 3887

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-2025

| Im Recherchenbericht angeführtes Patentdokument | | Datum der Veröffentlichung | Mitglied(er) der Patentfamilie | | Datum der Veröffentlichung |
|---|---|---|---|---|---|
| EP 3112323 | A1 | 04-01-2017 | CN | 106316082 A | 11-01-2017 |
| | | | EP | 3112323 A1 | 04-01-2017 |
| | | | JP | 6814511 B2 | 20-01-2021 |
| | | | JP | 2017014099 A | 19-01-2017 |
| | | | KR | 20170004886 A | 11-01-2017 |
| | | | US | 2017001901 A1 | 05-01-2017 |
| CN 113651527 | A | 16-11-2021 | KEINE | | |
| EP 4015475 | A1 | 22-06-2022 | CN | 116457314 A | 18-07-2023 |
| | | | EP | 4015475 A1 | 22-06-2022 |
| | | | JP | 7567054 B2 | 15-10-2024 |
| | | | JP | 2023551141 A | 07-12-2023 |
| | | | US | 2024101464 A1 | 28-03-2024 |
| | | | WO | 2022128271 A1 | 23-06-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4011840 A
- JP 2004123461 A
- EP 0598349 A
- CN 116715447 A
- WO 2008138744 A
- WO 2006122904 A
- WO 2004083141 A
- DE 10228599 A
- CN 113651527 A
- EP 3112323 A